# EUROPEAN PATENT APPLICATION

(11) **EP 4 804 478 A1**
(43) Date of publication of application: **09.09.2026**
(21) Application number: 26160293.2
(22) Date of filing: 24.02.2026
(51) Int. Cl.: H04L 43/062, H04L 41/0681, H04L 41/5009, H04L 41/16, H04L 41/045

(54) **EVENT REGISTRATION AND REPORTING ACROSS ENTITIES**

(30) Priority: 07.03.2025 US 202519073662
(71) Applicant: Apple Inc., Cupertino, CA 95014 (US)
(72) Inventor: BALASUBRAMANIAN, Srinivasan, Cupertino, CA, 95014 (US); MEDJKOUH, Said, Cupertino, CA, 95014 (US); TABET, Tarik, Cupertino, CA, 95014 (US)
(74) Representative: Karl, Christof

(57) **Abstract**

An apparatus configured to execute computer code to perform a service, process a list of available events, wherein the events are related to the service, generate a request to register for an event from the list of available events and process an event report based on the registered event, wherein the event report is received from the service executed by the apparatus or via signaling from a further component.

## Description

### Background

Existing implementations of event reporting among entities have several areas in need of improvement. Current methods of event reporting are limited to event sharing between a user equipment (UE) and a network via an access stratum (AS) intelligent controller located within the network. Such event reporting limits what may be modelled as a service for event reporting purposes and the roles that the UE and network play during such reporting.

### Summary

Some example embodiments are related to an apparatus having processing circuitry configured to execute computer code to perform a service, process a list of available events, wherein the events are related to the service, generate a request to register for an event from the list of available events and process an event report based on the registered event, wherein the event report is received from the service executed by the apparatus or via signaling from a further component.

Other example embodiments are related to an apparatus having processing circuitry configured to process a list of available events, generate a request to register for an event from the list of available events, process an event report based on the registered event, aggregate information in the event report with information from other event reports, wherein the other event reports comprise event reports for the event and event reports for other events and determine an issue related to a service based on the event report.

### Brief Description of the Drawings

Fig. 1 shows an example network arrangement according to various example embodiments.
Fig. 2 shows an example UE according to various example embodiments.
Fig. 3 shows an example base station according to various example embodiments.
Fig. 4 shows a signaling diagram for event registration and reporting within a UE.
Fig. 5 shows a signaling diagram for reporting events amongst a UE, a network and an aggregation and learning server.
Fig. 6 shows an example architecture for analytics augmentation between a carrier space and an aggregation and learning server.
Fig. 7 shows an example architecture for UE analytics augmentation on information sharing.
Fig. 8 shows a method of event registration/reporting within a UE and transmitting/receiving the registered events to external entities.
Fig. 9 shows a method of using an aggregation and learning server to share/receive event reports to a UE and/or network.
Fig. 10 shows an exemplary aggregation and learning server according to various exemplary embodiments.

### Detailed Description

The example embodiments may be further understood with reference to the following description and the related appended drawings, wherein like elements are provided with the same reference numerals. The example embodiments relate to operations for registering and reporting events among a UE, network and an aggregation and learning server (ALS).

The example embodiments are described with regard to a user equipment (UE). However, reference to a UE is merely provided for illustrative purposes. The example embodiments may be utilized with any electronic component that may establish a connection to a network and is configured with the hardware, software, and/or firmware to exchange signaling and/or data with the network. Therefore, the UE as described herein is used to represent any electronic component.

The example embodiments are also described with reference to a 5G New Radio (NR) network. However, the example embodiments may also be implemented in other types of networks, including but not limited to LTE networks, 5G-Advanced networks, future evolutions of the cellular protocol (6G networks, 7G networks), or any other type of network that can register or report event occurrences.

The current method of event reporting among entities is performed between a UE and a network via an access stratum (AS) intelligent controller through radio resource control (RRC) layer signaling.

The example embodiments provide operations for a UE or a network component to internally register and selectively report specific events that may then be shared with a third-party aggregation and learning server (ALS) via a non-access stratum (NAS) intelligent controller through hypertext transfer protocol (HTTP)/hypertext transfer protocol secure (HTTPS)/ MQTT (Message Queuing Telemetry Transport) signaling over internet protocol (IP).

In the example embodiments, a network component may refer to an actual hardware component of a network such as a base station, a switch, a router, a server, etc. However, the term network component may also refer to functions implemented by a radio access network (RAN) or a core network.

The example embodiments are described as including an event registration procedure and event reporting procedure. Both the registration and reporting are performed individually and internally within either a UE and/or a network. After the registration, the UE and/or network are able to share events with each other or may send/receive event reports with the ALS. All the reporting sent to the ALS from the UE and/or network may be aggregated, and the causes/fixes of each event may be sent to either the UE or network. The UE and network may register for specific events or filter received reports based on specific criteria. The example embodiments enable seamless cross layer optimizations by treating all devices including the UE and network as computing resources. Each of these example embodiments will be described in greater detail below.

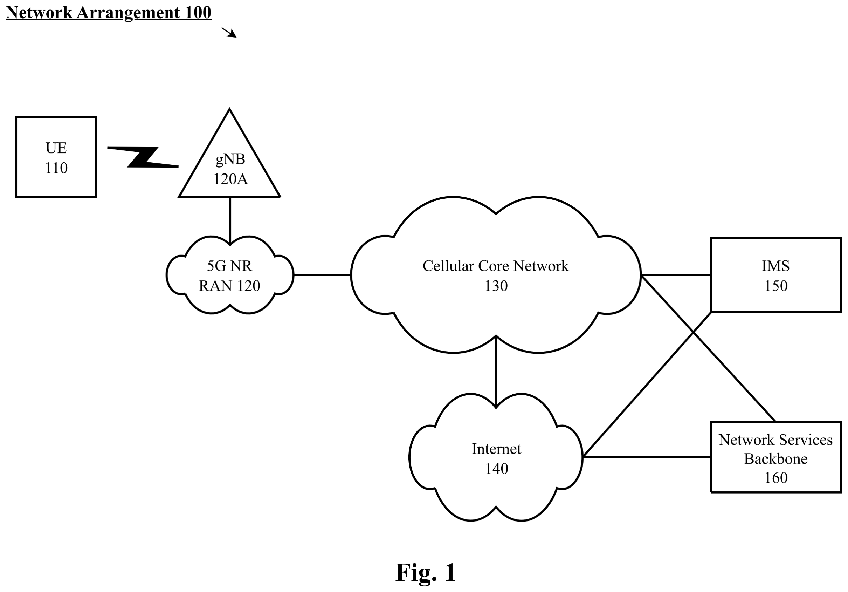

Fig. 1 shows an example network arrangement 100 according to various example embodiments. The example network arrangement 100 includes a UE 110. The UE 110 may be any type of electronic component that is configured to communicate via a network, e.g., mobile phones, tablet computers, desktop computers, smartphones, phablets, embedded devices, wearables, Internet of Things (IoT) devices, etc. An actual network arrangement may include any number of UEs being used by any number of users. Thus, the example of a single UE 110 is merely provided for illustrative purposes.

The UE 110 may be configured to communicate with one or more networks. In the example of the network arrangement 100, the network with which the UE 110 may wirelessly communicate is a 5G NR radio access network (RAN) 120. However, the UE 110 may also communicate with other types of networks (e.g., 5G cloud RAN, a next generation RAN (NG-RAN), a long term evolution RAN, a legacy cellular network, a WLAN, etc.) and the UE 110 may also communicate with networks over a wired connection. With regard to the example embodiments, the UE 110 may establish a connection with the 5G NR RAN 120. Therefore, the UE 110 may have a 5G NR chipset to communicate with the NR RAN 120.

The 5G NR RAN 120 may be a portion of a public land mobile network (PLMN) that may be deployed by a network carrier (e.g., Verizon, AT&T, T-Mobile, etc.). The 5G NR RAN 120 may include, for example, cells or base stations (Node Bs, eNodeBs, HeNBs, eNBS, gNBs, gNodeBs, macrocells, microcells, small cells, femtocells, etc.) that are configured to send and receive traffic from UEs that are equipped with the appropriate cellular chip set. The gNB 120A may include one or more communication interfaces to exchange data and/or information with the UE 110, the corresponding 5G NR RAN 120, the cellular core network 130, the internet 140, etc.

The UE 110 may connect to the 5G NR-RAN 120 via the gNB 120A. Any association procedure may be performed for the UE 110 to connect to the 5G NR-RAN 120. For example, as discussed above, the 5G NR-RAN 120 may be associated with a particular cellular provider where the UE 110 and/or the user thereof has a contract and credential information (e.g., stored on a SIM card). Upon detecting the presence of the 5G NR-RAN 120, the UE 110 may transmit the corresponding credential information to associate with the 5G NR-RAN 120. More specifically, the UE 110 may associate with a specific cell (e.g., the gNB 120A). However, as mentioned above, reference to the 5G NR-RAN 120 is merely for illustrative purposes and any appropriate type of RAN may be used.

In addition to the 5G NR RAN 120, the network arrangement 100 also includes a cellular core network 130, the Internet 140, an IP Multimedia Subsystem (IMS) 150, and a network services backbone 160. The cellular core network 130 may be considered to be the interconnected set of components that manages the operation and traffic of the cellular network. The cellular core network 130 also manages the traffic that flows between the cellular network and the Internet 140.

The IMS 150 may be generally described as an architecture for delivering multimedia services to the UE 110 using the IP protocol. The IMS 150 may communicate with the cellular core network 130 and the Internet 140 to provide the multimedia services to the UE 110. The network services backbone 160 is in communication either directly or indirectly with the Internet 140 and the cellular core network 130. The network services backbone 160 may be generally described as a set of components (e.g., servers, network storage arrangements, etc.) that implement a suite of services that may be used to extend the functionalities of the UE 110 in communication with the various networks.

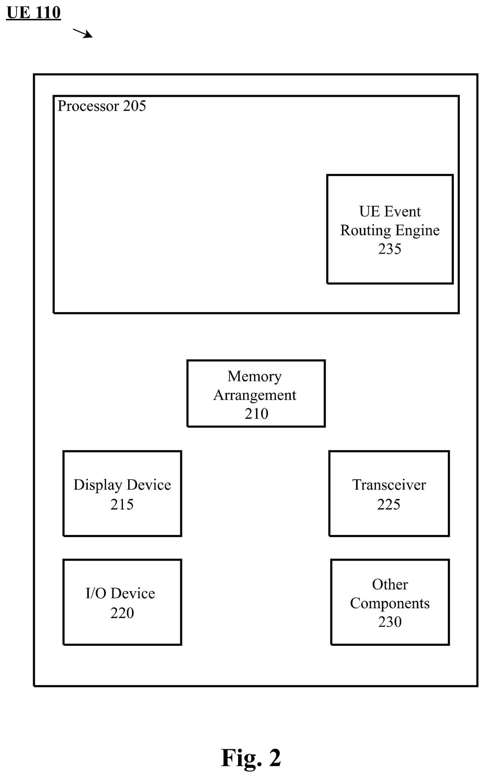

Fig. 2 shows an example UE 110 according to various example embodiments. The UE 110 will be described with regard to the network arrangement 100 of Fig. 1. The UE 110 may include a processor 205, a memory arrangement 210, a display device 215, an input/output (I/O) device 220, a transceiver 225 and other components 230. The other components 230 may include, for example, an audio input device, an audio output device, a power supply, a data acquisition device, ports to electrically connect the UE 110 to other electronic devices, etc.

The processor 205 may be configured to execute a plurality of engines of the UE 110. For example, the engines may include a UE event routing engine 235. The UE event routing engine 235 may perform various operations related to event reporting. Specifically, the UE event routing engine 235 may perform operations such as, but not limited to, registering events and reporting events internally within the UE 110 as well as sharing/receiving events or event reports with external entities. These and other operations are described in greater detail below.

The above referenced engine 235 being an application (e.g., a program) executed by the processor 205 is merely provided for illustrative purposes. The functionality associated with the engine 235 may also be represented as a separate incorporated component of the UE 110 or may be a modular component coupled to the UE 110, e.g., an integrated circuit with or without firmware. For example, the integrated circuit may include input circuitry to receive signals and processing circuitry to process the signals and other information. The engine may also be embodied as one application or separate applications. In addition, in some UEs, the functionality described for the processor 205 is split among two or more processors such as a baseband processor and an applications processor. The example embodiments may be implemented in any of these or other configurations of a UE.

The memory arrangement 210 may be a hardware component configured to store data related to operations performed by the UE 110. The display device 215 may be a hardware component configured to show data to a user while the I/O device 220 may be a hardware component that enables the user to enter inputs. The display device 215 and the I/O device 220 may be separate components or integrated together such as a touchscreen.

The transceiver 225 may be a hardware component configured to establish a connection with the 5G NR-RAN 120, an LTE-RAN (not pictured), a legacy RAN (not pictured), a WLAN (not pictured), etc. Accordingly, the transceiver 225 may operate on a variety of different frequencies or channels (e.g., set of consecutive frequencies). The transceiver 225 includes circuitry configured to transmit and/or receive signals (e.g., control signals, data signals). Such signals may be encoded with information implementing any one of the methods described herein. The processor 205 may be operably coupled to the transceiver 225 and configured to receive from and/or transmit signals to the transceiver 225. The processor 205 may be configured to encode, decode and/or process signals (e.g., signaling from a base station of a network) for implementing any one of the methods described herein.

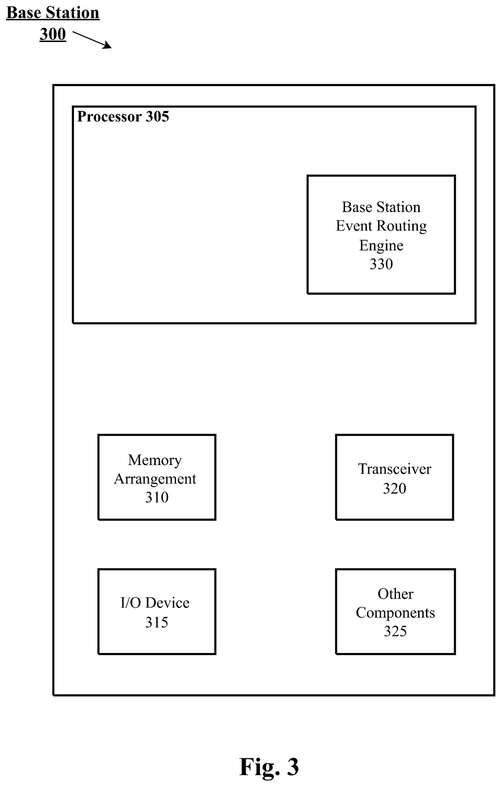

Fig. 3 shows an example base station 300 according to various example embodiments. The base station 300 may represent the gNB 120A or any other type of access node through which the UE 110 may establish a connection and manage network operations.

The base station 300 may include a processor 305, a memory arrangement 310, an input/output (I/O) device 315, a transceiver 320, and other components 325. The other components 325 may include, for example, an audio input device, an audio output device, a battery, a data acquisition device, ports to electrically connect the base station 300 to other electronic devices and/or power sources, TxRUs, transceiver chains, antenna elements, antenna panels, etc.

The processor 305 may be configured to execute a plurality of engines for the base station 300. For example, the engines may include a base station event routing engine 330. The base station event routing engine 330 may perform various operations related to event reporting. Specifically, the base station event routing function 330 may perform operations such as, but not limited to, registering events and reporting events internally within the base station 305 as well as sharing/receiving events or event reports with external entities. These and other operations are described in greater detail below.

The above noted engine 330 being an application (e.g., a program) executed by the processor 305 is only an example. The functionality associated with the engine 330 may also be represented as a separate incorporated component of the base station 300 or may be a modular component coupled to the base station 300, e.g., an integrated circuit with or without firmware. For example, the integrated circuit may include input circuitry to receive signals and processing circuitry to process the signals and other information. In addition, in some base stations, the functionality described for the processor 305 is split among a plurality of processors (e.g., a baseband processor, an applications processor, etc.). The example embodiments may be implemented in any of these or other configurations of a base station.

The memory arrangement 310 may be a hardware component configured to store data related to operations performed by the base station 300. The I/O device 315 may be a hardware component or ports that enable a user to interact with the base station 300.

The transceiver 320 may be a hardware component configured to exchange data with the UE 110 and any other UEs in the network arrangement 100. The transceiver 320 may operate on a variety of different frequencies or channels (e.g., set of consecutive frequencies). Therefore, the transceiver 320 may include one or more components to enable the data exchange with the various networks and UEs. The transceiver 320 includes circuitry configured to transmit and/or receive signals (e.g., control signals, data signals). Such signals may be encoded with information implementing any one of the methods described herein. The processor 305 may be operably coupled to the transceiver 320 and configured to receive from and/or transmit signals to the transceiver 320. The processor 305 may be configured to encode, decode and/or process signals (e.g., signaling from a UE) for implementing any one of the methods described herein.

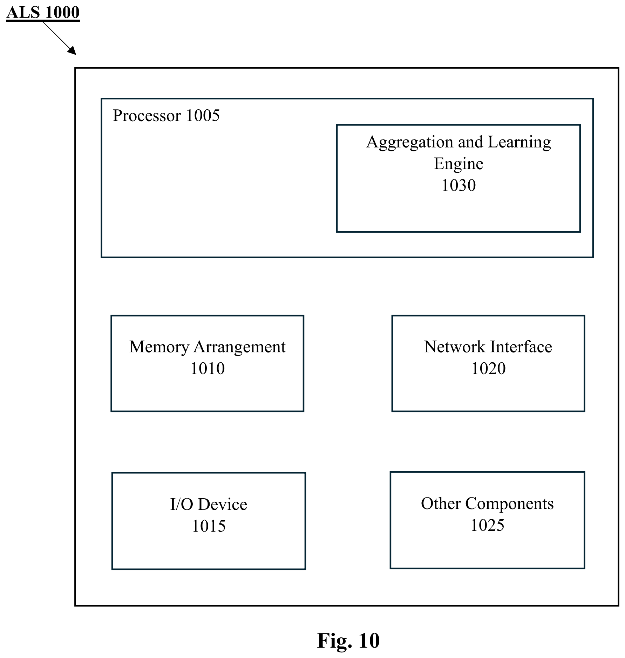

Fig. 10 shows an exemplary aggregation and learning server 1000 according to various exemplary embodiments. The ALS 1000 may represent a server that may receive or send event reports to/from a UE and a network, aggregate the received information, and selectively share the information to the UE and network based on a given set of criteria. In some examples, the ALS 1000 may be implemented in a server device such as illustrated in the example of Fig. 10. In other examples, the ALS 1000 may be implemented in a distributed manner such as in a cloud computing implementation or as a network function.

The ALS 1000 may include a processor 1005, a memory arrangement 1010, an input/output (I/O) device 1015, a network interface 1020, and other components 1025. The other components 1025 may include, for example, an audio input device, an audio output device, a battery, a data acquisition device, ports to electrically connect the ALS 1000 to other electronic devices and/or power sources, etc.

The processor 1005 may be configured to execute a plurality of engines for the ALS 1000. For example, the engines may include an aggregation and learning engine 1030 for performing operations related to receiving events from services, aggregating information related to the events including issues related to the events and potential corrective actions for the issues, determining the issues and/or corrective actions using an artificial intelligence/machine learning (AI/ML) model and reporting the issues and/or corrective actions to the services. These and other operations will be described in greater detail below.

The AI/ML model implemented by the ALS 1000 may be trained at the ALS 1000 using actual event reports or may be trained offline using actual event reports or sample event reports. When loaded on the ALS 1000, the AI/ML model may be updated as appropriate.

In some examples, the event report inputs may be fed to AI/ML module of the ALS engine 1030. The AI/ML module may include one or more learning-based and/or non-learning-based models for perceiving, synthesizing, and inferring information. Persons skilled in the art will appreciate that the AI/ML module can include any suitable number of processes to determine the issues or corrective actions associated with a service based on the event reports.

Persons of ordinary skill in the art will appreciate that AI/ML module of the ALS engine 1030 may include any suitable machine learning models that are well-known or widely available such as regression techniques, classification techniques, neural networks, and deep learning networks. In instances where AI/ML module comprises a machine-learning based model, the AI/ML module may be trained to generate the issue or corrective action data based on the event reports and aggregated event information using one or more well-known or widely available training techniques such as supervised learning, semi-supervised learning, unsupervised learning, and/or reinforcement learning techniques. The training data can include the aforementioned event report and aggregated information data.

The memory 1010 may be a hardware component configured to store data related to operations performed by the ALS 1000. The I/O device 1015 may be a hardware component or ports that enable a user to interact with the ALS 1000.

The network interface 1020 may be a hardware component configured to exchange data with UEs or the network either directly or indirectly. Because the ALS 1000 is typically resident within the network, the network interface 1020 may include a wired network interface such as an Ethernet or other wired type network interface. In some examples, the network interface 1020 may include a wireless interface and operate on a variety of different frequencies or channels (e.g., set of consecutive frequencies). Therefore, the network interface 1020 may include one or more components (e.g., radios) to enable the data exchange with the various networks and UEs. The network interface 1020 includes circuitry configured to transmit and/or receive signals (e.g., control signals, data signals). Such signals may be encoded with information implementing any one of the methods described herein. The processor 1005 may be operably coupled to the network interface 1020 and configured to receive from and/or transmit signals to the network interface 1020. The processor 1005 may be configured to encode, decode and/or process signals for implementing any one of the methods described herein.

The example embodiments relate to improved event reporting between various entities. Entities may include UE(s), network components/functions (e.g., RAN, Core, application layer, service layer, or Network-as-a-service (NaaS) layer including controlling application programming interfaces (APIs), UE original equipment manufacturer (OEM) servers, third party servers, etc. The example embodiments relate to defining services for each entity. Services for purposes of the example embodiments may include any operations used by or performed by each entity, e.g., applications (such as YouTube, Facetime, etc.), Radio Resource Control (RRC) signaling of a protocol stack, network subscription services, etc. Once services are defined, each service within each entity may register for events. Registering for the event allows each entity to report when such an event occurs. When the event does occur, the service may report the event within itself. For example, if a UE service experiences an event, it will report the occurrence of such an event within itself (e.g., internal registration/reporting). The entity may then report the event to any or all of the other external entities. The ALS server may aggregate all of the data sent to it surrounding each event and share it with the other entities. Each entity is able to share events among each other via HTTP/HTTPS/MQTT signaling over IP protocol. The following describes some example use cases in greater detail.

In a first aspect of the example embodiments, the registration and reporting of events within a UE is disclosed. Throughout the remainder of this description, a network may include similar components and perform similar operations as the UE 405 relating to the registration and reporting of events internally as described below. Additionally, the reporting of events may occur between several different entities, e.g., a UE 405, a network (not depicted) and an aggregation and learning server (not depicted).

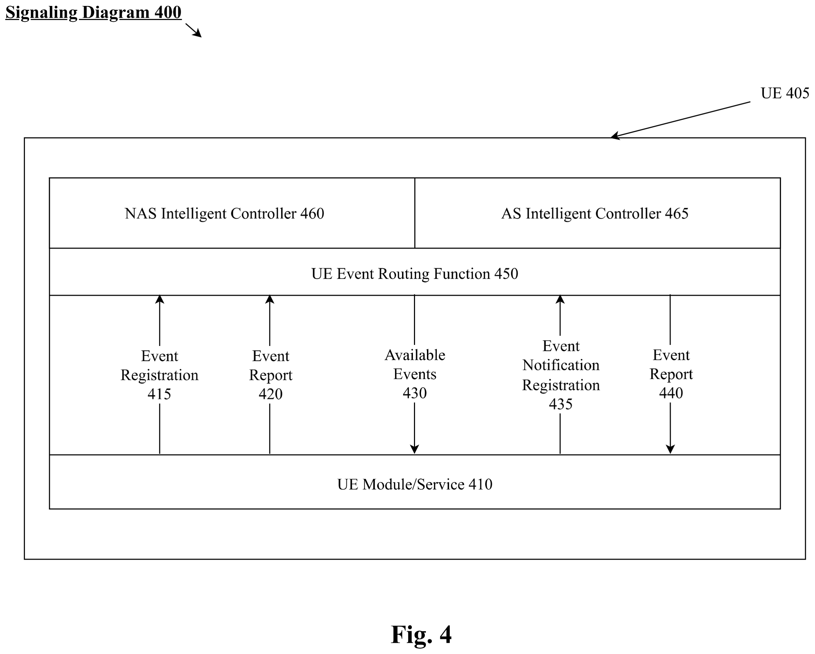

Fig. 4 shows a signaling diagram 400 for event registration and reporting within a UE. The signaling diagram 400 depicts operations for a UE 405 to act as a publisher of events and thus depicts the reporting of events internally within the UE. The signaling diagram 400 also depicts operations for a UE 405 to act as a subscriber of events and thus depicts the registration of events internally within the UE 405.

The signaling diagram 400 includes various other components that are described in greater detail below. Within the UE 405, there is a UE module/service 410. The UE module/service 410 represents various services utilized by the UE that may be used to report events to other entities, e.g., a network and ALS. As described above, in the example embodiments, the services may include any operations performed by the UE 405. These operations may include, but are not limited to, applications, protocol layer operations (Radio Link Control (RLC) layer, the Medium Access Control (MAC) layer, etc.), component operations (e.g., battery operations, modem operations, application processor operations, etc.), etc. Therefore, events occurring within an application running on the UE 405 or events occurring at a protocol layer may be shared among different entities. Events may be defects in performance, network congestion, handover failures, etc.

The UE 405 also includes a UE event routing function 450 that facilitates the registration and reporting of events internally within the UE between the UE module/service 410 and a Non-Access Stratum (NAS) intelligent controller 460 and/or an Access Stratum intelligent (AS) controller 465. The UE event routing function 450 may also facilitate the sharing of events among external entities, e.g., the network and ALS. The NAS controller 460 and/or AS controller 465 may receive the events generated by the UE module/service 410 and may also advertise the available events to the UE module/service 410.

415 and 420 depict the UE 405 acting as a publisher of events and thus depict the operations related to the reporting of events internally within the UE 405. At 415, the UE module/service 410 registers the types of events that it wants to generate with the NAS/AS intelligent controllers 460 and 465 through the UE event routing function 450. The registering of the events in 415 may include the details of each event including the parameters associated with each event, e.g., the parameters the UE 405 will report for each event. This information for each registered event may be reported by the UE 405 to the network as a UE capability. In the case of a network service reporting registered events, the network may report each registered event to a UE as a network capability.

After the UE 405 registers the specific events, the UE 405 may generate and send event reports 420 concerning the registered events to the NAS/AS controllers 460 and 465 through the UE event routing function 450. The UE module/service 410 may send individual reports for each event or a report containing several events that have been filtered from the entire set of events based on one or more selection criteria.

Operations 430, 435 and 440 depict the UE acting as a subscriber of events and thus depicts the registration of events internally within the UE 405. At 430, the NAS/AS controllers 460 and/or 465 may advertise the available events generated from the different services to the UE module/service 410 wanting to discover the events. These events may be internal to the UE 405 (e.g., other UE module(s)/service(s) performed by the UE 405) or events that are external to the UE 405, e.g., network related services or aggregated services from the ALS. The NAS/AS controllers 460 and 465 advertise these events to the UE module/service 410 through the UE event routing function 450.

These events may be abstracted, filtered or raw reported to the UE module/service 410 requesting to receive the event notifications. The UE module/service 410 may request a specific type of filtering of the events reported to the UE module/service 410 does not receive notifications of all available events. The events may be filtered either by the UE or an external entity, e.g., the network and ALS. To provide a specific example, the UE module/service 410 may be a streaming service executed by the UE 405 (e.g., Netflix). The UE module/service 410 may subscribe to events for the streaming service. The events may include, for example, whether downloads are successful or not successful, delays in downloads, packet error rate, transport layer ARQ window collapse, etc. The events may be filtered such that the UE module/service 410 only receives event reporting when a specific type of event occurs, e.g., a threshold number of unsuccessful downloads in a certain period of time occur, the packet error rate exceeds a threshold, the download delay exceeds a predetermined time threshold, etc. This filtered information may indicate to the UE module/service 410 that an unsuccessful download is an issue at the provider's end or network end and not a local UE 405 issue.

In another example, the network may have multiple parameters for various events. These multiple parameters may be related to various network operations and may be useful for network resolution of an issue. However, the network operator may not want to expose all these parameters outside of the network, e.g., to UEs. Thus, the network may only report a subset of an event (e.g., selected parameters) to a UE.

The event reporting may also be based on various factors such as UE battery levels, network congestion, current activity, time of day, day of the week, etc.

After the UE module/service 410 receives the available events, it may selectively register for specific events to be notified about based on the selected criteria in an event notification registration message 435. After registering, the UE module/service 410 may receive an event report 440 that concerns the registered events. The event notification registration message 435 may contain information about the subscribed events such as recommendations and/or models learned from history, fixes, root causes and shared experiences based on the registered events. Again, since any operation performed by the UE (other UEs) or the network may be modelled as a service, the range of events that a UE may register for are close to endless and the above examples are only a small fraction of the possible available events.

The components and operations described in Fig. 4 may also be performed by a network (not depicted). For instance, the network may contain a network module/service that represents various services within the network. For example, various application functions may be modelled as services such as the access and mobility management function (AMF), session management function (SMF), authentication server function (AUSF), etc. similar to the UE module/service 410. Again, any other operations performed by the network may also be modelled as a service. The network may also have a network event routing function that helps facilitate the reporting and registering of events within the network and the sharing of events with external entities, e.g., the UE and ALS. The network may also contain NAS/AS controllers that perform the network subscriber/publisher operations corresponding to operations 415, 420, 430, 435 and 440 of Fig. 4.

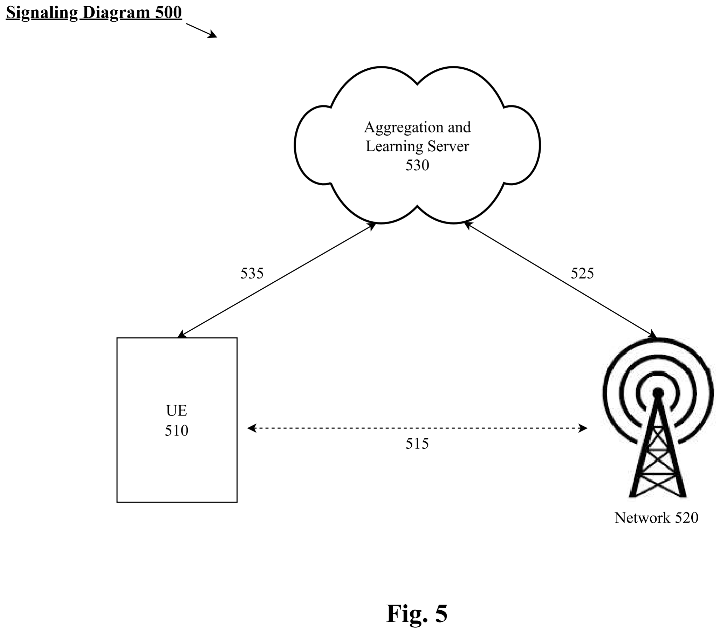

Fig. 5 shows a signaling diagram 500 for reporting events among a UE, a network and an aggregation and learning server (ALS). The signaling diagram 500 depicts various entities that may share events among each other. Among those entities, is an ALS 530. The ALS 530 may be, for example, a server that may receive or send event reports to/from a UE and a network, aggregate the received information and selectively share the information to the UE and network based on a given set of criteria. The ALS 530 may be provided by an operator of the network, by the original equipment manufacturer (OEM) of the UE or any component within the network or by a third party. The ALS 530 may be implemented via a server, multiple distributed servers, a cloud implementation, etc. In addition, while Fig. 5 shows one UE 510 and one network 520, many UEs and multiple networks may communicate with the ALS 530.

The ALS 530 may aggregate events, issues, fixes, etc. from the different modules contained within the UE (e.g., module/service 410) and network module(s)/service(s). The aggregated data may then be used for analysis and machine learning to optimize configuration models and prevent future issues. The ALS 530 may use the information to train an agent to identify the root-cause of the issue and share the recommendations and configurations with the network 520 and/or the UE 510 to adapt policies and models to prevent these issues from happening in the future. The aggregation may occur periodically depending on the feature for which it is designed, e.g., load balancing, handover, etc. Additionally, the period and content of the data shared may be agreed between the network and the UE.

Operation 515 depicts signaling between the UE 510 and the network 520. The UE 510 and the network 520 may share events in either direction that are registered and reported internally within their respective routing functions. The UE 510 and the network 520 may share information via the AS intelligent controllers through radio link layer signaling.

Operation 525 shows signaling between the network 520 and the ALS 530. This signaling may be performed via a NAS intelligent controller of the network 520 though hypertext transfer protocol (HTTP)/hypertext transfer protocol secure (HTTPS) signaling or internet protocol (IP) signaling. The network 520 may send a report of the events generated by the network 520 or events shared with the network 520 by the UE 510. The report may include information identifying the event and other information such as the identified root causes and fixes of an event. Alternatively, the ALS 530 may send recommendations and/or models learned over time, fixes and shared experiences concerning an event to the network 520 through the HTTP/HTTPS or IP protocol signaling to the network 520.

Operation 535 shows signaling between the UE 510 and the ALS 530. This signaling may be performed via the NAS intelligent controller through hypertext transfer protocol (HTTP)/hypertext transfer protocol secure (HTTPS) signaling or internet protocol (IP) signaling. The UE 510 may send a report of the events generated by the UE 510 or events shared with the UE 510 by the network 520. The report may include information identifying the event and other information such as the identified root causes and fixes of an event. Alternatively, the ALS 530 may send recommendations and/or models learned over time, fixes and shared experience concerning an event to the UE 510 via the HTTP/HTTPS or IP protocol signaling.

The operations depicted in Fig. 5 occur in no particular order. Therefore, operations 535 may occur before or after operations 515 and 525, operations 515 could occur before or after operations 525 and 535, and operation 525 may occur before or after operations 515 and 535.

The HTTP/HTTPS signaling between the network 520 and ALS 530 and the UE 510 and ALS 530 may be performed via an EMF routing function. Two EMF routing functions based on near-real time (RT) and non-RT may be used. Near-RT is the time period after the publisher publishes an event to the subscribers. This period may be, for example, less than 50 milliseconds with a tolerance of 25 milliseconds. After this time period, the subscribers may take specific actions based on the published event. Non-RT is information that is based on the published events that are archived for offline processing including recognizing patterns, e.g., Artificial Intelligence (AI)/machine learning (ML) model training. Non-RT is based on the near-RT router and the subscribers and allows the information to be sent from near-RT entities to non-RT entities for additional processing. The routing functions are separated as non-RT and near-RT to account for the network architecture of the example embodiments. Particularly, the routing functions may be separated to account for control pane/user pane separation (CUPS), virtualization, cloud and open RAN realizations.

The EMF information exchanged between entities may be subject to a specific UE vendor or network vendor. Additionally, this information may be enabled for the mobile network operator (MNO) as a whole. The security keys and types of information exchanged may depend on these limitations. The security keys used to secure the HTTP communications may be derived from K_{gNB}, K_{AMF}, or K_{SEAF}/K_{AUSF}. These keys and the operations of these keys may be defined in standards such as the 3GPP Technical Specifications (TS), e.g., 3GPP TS 33.501. Independent derivations of security keys may be used for near-RT and non-RT EMF routers. Additionally, the device type may be known to the network via a chipset-id. The decision to share and the extent of the information shared may be biased from the network based on the device type and the OEM.

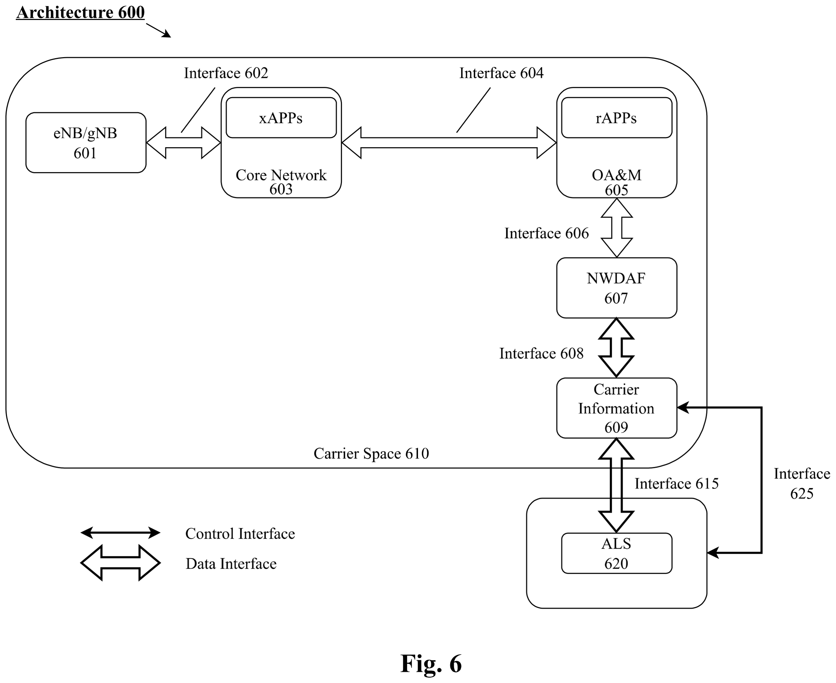

Fig. 6 shows an example architecture 600 for analytics augmentation between a carrier space 610 and an aggregation and learning server 620. Fig. 6 depicts various entities within the carrier space and various data plane/control plane interfaces between those entities within the carrier space 610. Additionally, Fig. 6 depicts various data plane/control plane interfaces between entities of the carrier space 610 and the third-party/aggregation and learning server 620.

Interface 615 depicts a control plane interface between the third-party server (e.g., implementing an ALS 620) and carrier information 609. The carrier information 609 is located within the carrier space 610. Information may be shared in either direction of the interface 615 between the third-party server 620 and the carrier information 609. Information shared via the interface 615 may be shared either as raw metrics or digested key performance indicators (KPIs). Information may also be shared between the carrier information 609 and the third-party server 620 via the interface 625. The interface 625 may be a control plane interface and allows data to be transferred in either direction between the carrier information 609 and the third-party server 620. Metrics and KPI definition alignment of the information sent using the interface 615 may depend upon the carrier/infrastructure or the vendor interest/capability.

Interface 608 is a data plane interface and allows information to be sent in either direction between the carrier information 609 and the network data analytics function (NWDAF) 607. The interface 608 may be defined in a way to translate information from the format of the carrier to 3GPP standards format or vice versa depending on which way the information is traveling. The NWDAF 607 may use AI/ML to assist in the anomaly detection/prevention related to events based on the aggregated information received from the third-party server 620 via the interface 608 and one of interfaces 615 or 620. Interface 606 is a data plane interface and allows information to be exchanged in either direction between the NWDAF and the operations, administration and management (OA&M) layer. The OA&M allows for carrier driven management and optimization of the network.

Further depicted in Fig. 6 is the interface 604 between the OA&M and the core network 603. This interface is a data plane interface and allows information to be shared in either direction between the core network 603 and the OA&M 606. This interface may be, for example, an O-RAN A1/O1 interface. Fig. 6 also depicts an interface 602 that is a data plane interface carrying information in either direction between the core network 603 and an eNB/gNB node 601. The interface 602 may be an O-RAN E2 interface.

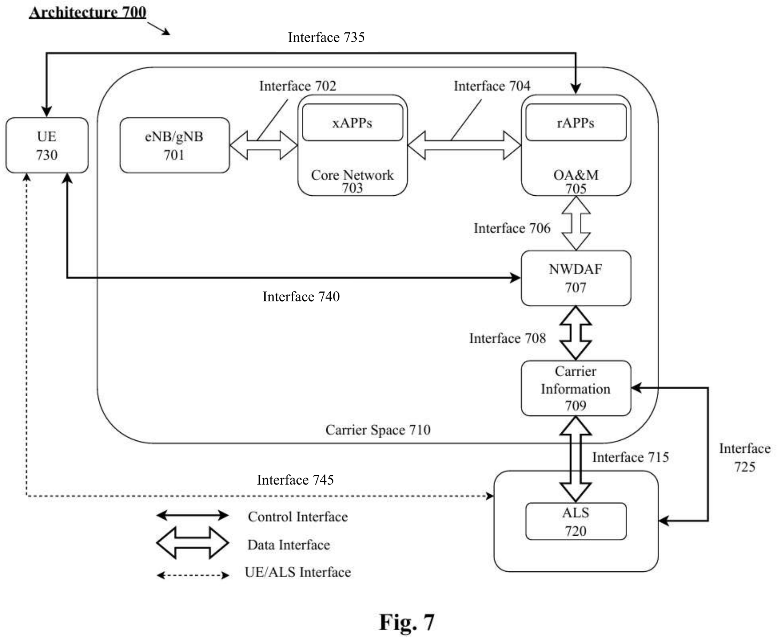

Fig. 7 shows an example architecture 700 for UE analytics augmentation on information sharing. Components/interfaces 701-710, 715, 720 and 725 correspond to components/interfaces 601-610, 615, 620 and 625 as described in Fig. 6. Fig. 7 additionally includes a UE 730, and interfaces 735, 740 and 745.

Interface 735 is a control plane interface that allows information to be exchanged in either direction between the UE 730 and the OA&M 705. Once information arrives at the OA&M 705 from the UE 730, this information may be sent to the NWDAF 707 via the interface 706. Interface 740 is a control plane interface that allows information to be sent in either direction between the UE 730 and to the NWDAF 707 directly without having to go through the OA&M 705 or through the third-party server 720. The interface 740 allows the UE to share the problems it is experiencing directly with the NWDAF 707. The interface 745 allows the UE to share information in either direction between the UE 730 and the ALS 720. This information may be transmitted via interface 745 through HTTP/HTTPS or IP protocol signaling. Once the ALS 720 acquires information from the UE 730 via the interface 745, it may signal to the carrier information 709 via one of the interfaces 715 or 725. This information is then converted from the format of the carrier to 3GPP standards format and signaled to the NWDAF 707 via the interface 708. This information may then be signaled to the OA&M 705 via the interface 706.

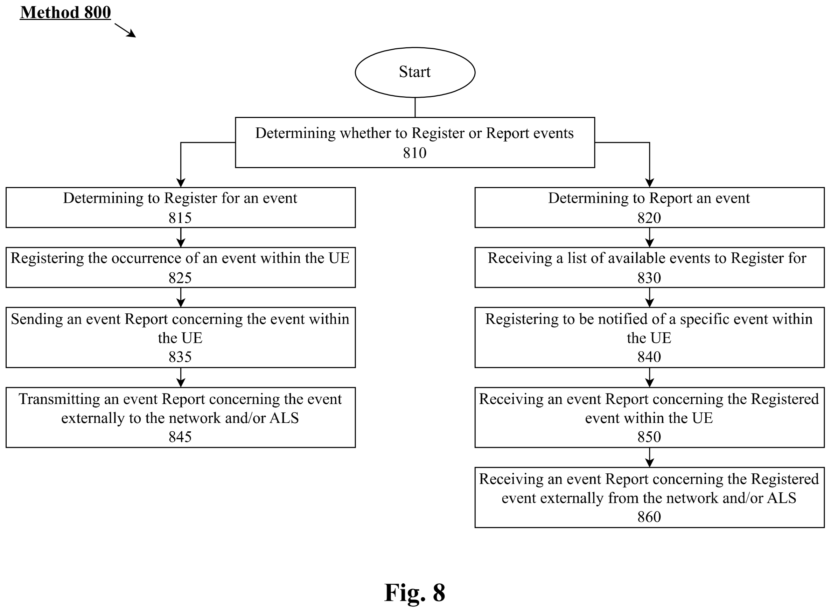

Fig. 8 shows a method 800 of event registration/reporting within a UE and transmitting/receiving the registered events to external entities. While the method 800 is described from the viewpoint of a UE. A similar method may be performed by a network for event registration/reporting within a network and transmitting/receiving the registered events to external entities.

In 810, it is determined whether to register or report events. Based on the determination made in 810, the method may proceed to either 815 or 820. In 815, the UE determines that it wants to register an event. In 825, the UE registers the occurrence of a specific event internally within the UE. 825 may comprise aspects similar to 415 of Fig. 4. In 835, an event report concerning the registered event may be sent internally within the UE. 835 is similar to 420 of Fig. 4. In 845, an event report concerning the registered event may be sent externally to the network and/or ALS. 845 may comprise aspects similar to 515 and 535 of Fig. 5.

If it is determined to report an event at 810, the method moves to 820. In 820, it is determined to report an event. In 830, the UE receives a list of available events for which the UE may register. 830 may comprise aspects similar to 430 of Fig. 4. In 840, the UE registers to be notified of a specific event. The UE may perform 840 entirely within the UE. 840 may comprise aspects similar to the 435 of Fig. 4. In 850, an event report is received based on the registered event. 850 may be performed entirely within the UE. 850 is similar to 440 of Fig. 4. In 860, the UE receives an event report concerning the registered event externally from the network and/or ALS. 860 is similar to 515 and 535 of Fig. 5.

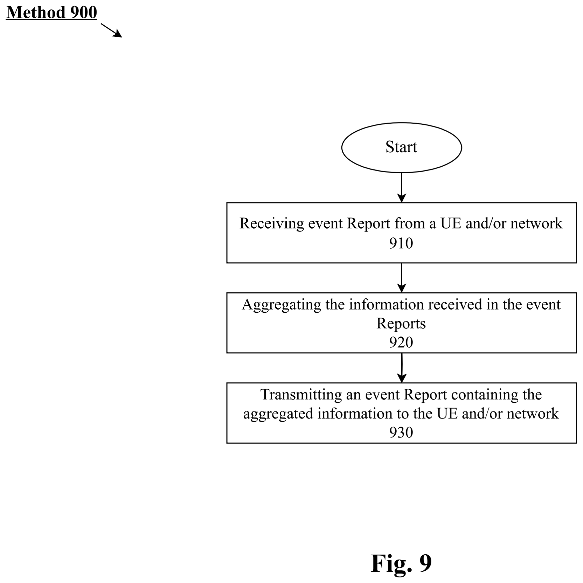

Fig. 9 shows a method 900 of using an ALS to share/receive event reports to a UE and/or network. Thus, the method 900 is described from the viewpoint of an ALS.

In 910, the ALS receives an event report from the UE and/or network concerning one or more registered events. 910 is similar to 525 and 535 of Fig. 5. In 920, the ALS aggregates the information from the event reports received at 910. In 930, the ALS transmits the aggregated information from all of the received events reports to the UE and/or network. 930 is similar to 525 and 535 of Fig. 5.

The example embodiments may be used to share information regarding events to proactively identify scenarios where corrective action may be needed. Several examples of different events and applications of the example embodiments are provided below. Again, these are only examples, and the example embodiments may be applied to multiple use cases.

In a first use case, the example embodiments may be used to identify a handover (HO) failure before it occurs so as to retain connectivity. The predictions for HO failures may be determined by identifying a specific time series based on measurements of the various metrics. The actual HO failures may be reported together with the metrics determined at several points prior to the occurrence of the event (e.g., HO failure). Training may be performed to determine the metrics either by the UE learning its own behaviors, training by the network, or crowd-sourced training across multiple networks. Additionally, the start of the time series that results in the HO failure may be identified as the trigger point for event reports to be initiated. The point where conditions are improved and no longer require the event reporting may be identified as well. This information may be sent to the event reporter. These patterns are also either determined locally in a given UE and/or provided through learning from the network or crowd-sourcing across multiple networks.

Based on the events generated, the entities receiving the event may take corrective action to prevent HO failures. In response to the identification of a possible HO failure, the entities receiving the event may prevent the HO failure. For example, the time series information may be used in the network to optimize the HO target and potentially initiate a conditional HO to multiple targets allowing the UE to determine the preferred cell. The network may also enable channel state information (CSI) reference signal (CSI-RS)/tracking reference signal (TRS) based mobility to increase reliability. Additionally, an indication may be provided to the UE to perform more aggressive measurements providing the required gaps, e.g., multiple measurements filtered every 20ms instead of 40ms. Further, periodic measurements may be enabled instead of event-based for a fixed duration.

In a second use case, the example embodiments may be used to improve hybrid automatic repeat request (HARQ) techniques performed at different layers proactively based on feedback or explicit control information exchange. Events may be reported on per threshold transitions at different layers. The information concerning the reported event may then be used to initiate packet repetitions associated with each HARQ transmission (Tx), Packet Data Convergence Protocol (PDCP) duplication at the IP layer/Transmission Control Protocol (TCP) and Quick UDP Internet Connection (QUIC) layers/Application layer. This may include selective repetition on specific preferred radio links based on the reported events associated with the individual RF paths between the UE and the network.

Scenarios where the uplink (UL) transmissions have failed at the different layers may be identified and then the packets/segments may be proactively retransmitted without waiting for feedback from the network. HARQ failure detection may result in the UE retransmitting the packet from the RLC. To accomplish the HARQ failure detection and packet retransmission, the PDCP discard timer may expire and its retransmission should be avoided. Additionally, a set of failures may be detected requiring the full TCP/IP packet to be retransmitted. Also, it may be recognized that the TCP window has moved forward either due to the receiver having received the packet or that it has abandoned the missing segments and as such the window should be advanced. When encountering congestion, the failed packet/HARQ segment may be abandoned per the random early drop logic in the UE to recover from congestion. The HARQ may have failed due to preemption to accommodate higher priority traffic, and the UE may reinitiate the transmission of the same HARQ segment without waiting for RLC level feedback. RLC level failures/PDCP level failures may be recognized, and the UE may apply the above logic to ensure that automatic retransmissions are performed only when relevant.

In a third use case, the example embodiments may be used to determine quality of experience (QoE) metrics at the application layer. This may enhance performance and potentially diminish the performance to accommodate other users or services within the same user when the QoE metrics are sufficiently met. In this use case, specific QoE metrics may be identified as relevant for a given service. The relative distance between the current measured value and expected threshold setting for a given QoE metric may be determined. The specific key QoE metric that is tracked for a given service may then be selectively reported. This selective reporting provides visibility to the actual application performance and enables the network to take corrective actions as needed, e.g., changes are made to the quality of service (QoS) metrics supported in the RAN and core networks to accommodate the QoE metric experienced.

The above examples are just three example use cases provided to illustrate how the example embodiments may be implemented to improve UE and/or network performance based on event reporting. There may be many additional use cases to which the example embodiments may be applied.

In the above example use cases, it was described that a single entity, e.g., the UE or a network component may resolve an issue based on event reporting. However, there may be scenarios where multiple entities may attempt to resolve the issue. In these scenarios, these multiple entities may be in communication with each other before proceeding to resolve the issue. For example, before a UE attempts to resolve an issue on its own, the UE may communicate with the network indicating the attempted resolution of the issue. The network may be independently attempting to resolve the same issue. In such a case, because the UE is communicating with the network, this may allow the network to discontinue its attempt to resolve the issue or override the attempt by the UE so the network may resolve the issue. This may also work in the opposite direction where the UE discontinues its attempt to resolve the issue or overrides the attempt by the network. These resolution communications may also be defined as events where the communications are communicated in a similar manner to the event reporting described above.

### Examples

In a first example, a method, comprising executing computer code to perform a service, processing a list of available events, generating a request to register for an event from the list of available events and processing an event report based on the registered event, wherein the event report is received from the service executed by the apparatus or via signaling from a further component.

In a second example, the method of the first example, wherein the event report is received from a service executed by one of a user equipment (UE), a network component or an aggregation and learning server (ALS).

In a third example, the method of the first example, wherein the event report is received via one of hypertext transfer protocol (HTTP) signaling, hypertext transfer protocol secure (HTTPS), Message Queuing Telemetry Transport (MQTT) signaling over internet protocol (IP) signaling.

In a fourth example, the method of the first example, further comprising determining an issue related to a service being executed by the apparatus based on the event report and determining a corrective action to attempt to resolve the issue.

In a fifth example, the method of the fourth example, wherein the processing circuitry determines the issue based on an artificial intelligence/machine learning (AI/ML) model and the event report.

In a sixth example, the method of the first example, wherein the event report comprises a corrective action to attempt to resolve an issue related to the event report.

In a seventh example, the method of the first example, wherein the event reports comprise one of an abstracted event report, a filtered event report or a raw event report.

In an eighth example, the method of the seventh example, wherein the request to register comprises an indication of whether the event report is to be the abstracted event report, the filtered event report or the raw event report.

In a ninth example, the method of the eighth example, wherein the request to register comprises selection criteria for the abstracted event report or the filtered event report.

In a tenth example, the method of the first example, further comprising generating an event registration for each event the processing circuitry is configured to report.

In an eleventh example, the method of the tenth example, wherein the event registration for each event comprises an identification of the event and one or more parameters associated with the event.

In a twelfth example, the method of the tenth example, wherein the event registration is reported as a capability of the apparatus.

In a thirteenth example, the method of the tenth example, further comprising generating a report for each event the processing circuitry is configured to report.

In a fourteenth example, the method of the thirteenth example, wherein the report is transmitted by the apparatus based on a condition, wherein the condition comprises a battery level, a network congestion level, a current activity, a time of day, or a day.

In a fifteenth example, the method of the thirteenth example, wherein the report is transmitted to a service executed by one of a user equipment (UE), a network component or an aggregation and learning server (ALS).

In a sixteenth example, the method of the fifteenth example, wherein the report is transmitted via one of hypertext transfer protocol (HTTP) signaling, hypertext transfer protocol secure (HTTPS), Message Queuing Telemetry Transport (MQTT) signaling over internet protocol (IP) signaling.

In a seventeenth example, one or more processors configured to perform any of the methods of the first through sixteenth examples.

In an eighteenth example, a user equipment (UE) configured to perform any of the methods of the first through sixteenth examples.

In a nineteenth example, a network component configured to perform any of the methods of the first through sixteenth examples.

In a twentieth example, a method, comprising processing a list of available events, generating a request to register for an event from the list of available events, processing an event report based on the registered event, aggregating information in the event report with information from other event reports, wherein the other event reports comprise event reports for the event and event reports for other events and determining an issue related to a service based on the event report.

In a twenty first example, the method of the twentieth example, wherein the event report comprises information identifying the issue.

In a twenty second example, the method of the twentieth example, wherein determining the issue is based on the aggregated information and the method further comprises generating, for transmission to the service, an indication of the issue.

In a twenty third example, the method of the twenty second example, wherein determining the issue is based on an artificial intelligence/machine learning (AI/ML) model, the event report and the aggregated information.

In a twenty fourth example, the method of the twentieth example, further comprising determining a corrective action to attempt to resolve an issue related to a service based on the event report.

In a twenty fifth example, the method of the twenty fourth example, wherein the event report comprises information identifying the corrective action.

In a twenty sixth example, the method of the twenty fourth example, wherein determining the corrective action is based on the aggregated information, the information further comprising generating, for transmission to the service, an indication of the corrective action.

In a twenty seventh example, the method of the twenty fourth example, wherein determining the corrective action is based on an artificial intelligence/machine learning (AI/ML) model, the event report and the aggregated information.\

In a twenty eighth example, one or more processors configured to perform any of the methods of the twentieth through twenty seventh examples.

Those skilled in the art will understand that the above-described example embodiments may be implemented in any suitable software or hardware configuration or combination thereof. An example hardware platform for implementing the example embodiments may include, for example, an Intel x86 based platform with compatible operating system, a Windows OS, a Mac platform and MAC OS, a mobile device having an operating system such as iOS, Android, etc. The example embodiments of the above described method may be embodied as a program containing lines of code stored on a non-transitory computer readable storage medium that, when compiled, may be executed on a processor or microprocessor.

Although this application described various embodiments each having different features in various combinations, those skilled in the art will understand that any of the features of one embodiment may be combined with the features of the other embodiments in any manner not specifically disclaimed or which is not functionally or logically inconsistent with the operation of the device or the stated functions of the disclosed embodiments.

Some embodiments described herein can include use of learning and/or non-learning-based process(es). The use can include collecting, pre-processing, encoding, labeling, organizing, analyzing, recommending and/or generating data. Entities that collect, share, and/or otherwise utilize user data should provide transparency and/or obtain user consent when collecting such data. The present disclosure recognizes that the use of the data in the AI/ML modules can be used to benefit users.

For example, the data can be used to train models that can be deployed to improve performance, accuracy, and/or functionality of applications and/or services. Accordingly, the use of the data enables the AI/ML module to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the AI/ML module are also contemplated by the present disclosure.

The present disclosure contemplates that, in some embodiments, data used by AI/ML module includes publicly available data. To protect user privacy, data may be anonymized, aggregated, and/or otherwise processed to remove or to the degree possible limit any individual identification. As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with AI/ML module, should attempt to comply with well-established privacy policies and/or privacy practices.

As described above, one aspect of the present technology is the gathering and use of data available from specific and legitimate sources to improve the delivery to users of invitational content or any other content that may be of interest to them. The present disclosure contemplates that in some instances, this gathered data may include personal information data that uniquely identifies or can be used to identify a specific person. Such personal information data can include demographic data, location-based data, online identifiers, telephone numbers, email addresses, home addresses, data or records relating to a user's health or level of fitness (e.g., vital signs measurements, medication information, exercise information), date of birth, or any other personal information.

The present disclosure recognizes that the use of such personal information data, in the present technology, can be used to the benefit of users. For example, the personal information data can be used to deliver targeted content that may be of greater interest to the user in accordance with their preferences. Accordingly, use of such personal information data enables users to have greater control of the delivered content. Further, other uses for personal information data that benefit the user are also contemplated by the present disclosure.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are generally recognized as meeting or exceeding industry or governmental requirements for maintaining the privacy of users. Such information regarding the use of personal data should be prominent and easily accessible by users, and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations that may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, such as in the case of advertisement delivery services, the present technology can be configured to allow users to select to "opt in" or "opt out" of participation in the collection of personal information data during registration for services or anytime thereafter. In another example, users can select not to provide mood-associated data for targeted content delivery services. In yet another example, users can select to limit the length of time mood-associated data is maintained or entirely block the development of a baseline mood profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the application.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing identifiers, controlling the amount or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users based on aggregated non-personal information data or a bare minimum amount of personal information, such as the content being handled only on the user's device or other non-personal information available to the content delivery services.

It will be apparent to those skilled in the art that various modifications may be made in the present disclosure, without departing from the spirit or the scope of the disclosure. Thus, it is intended that the present disclosure cover modifications and variations of this disclosure provided they come within the scope of the appended claims and their equivalent.

## Claims

1. An apparatus comprising processing circuitry configured to:
execute computer code to perform a service;
process a list of available events, wherein the events are related to the service;
generate a request to register for an event from the list of available events; and
process an event report based on the registered event, wherein the event report is received from the service executed by the apparatus or via signaling from a further component.

2. The apparatus of claim 1, wherein the event report is received from a service executed by one of a user equipment (UE), a network component or an aggregation and learning server (ALS).

3. The apparatus of claim 1, wherein the event report is received via one of hypertext transfer protocol (HTTP) signaling, hypertext transfer protocol secure (HTTPS), Message Queuing Telemetry Transport (MQTT) signaling over internet protocol (IP) signaling.

4. The apparatus of claim 1, wherein the processing circuitry is further configured to:
determine an issue related to a service being executed by the apparatus based on the event report; and
determine a corrective action to attempt to resolve the issue.

5. The apparatus of claim 4, wherein the processing circuitry determines the issue based on an artificial intelligence/machine learning (AI/ML) model and the event report.

6. The apparatus of claim 1, wherein the event report comprises a corrective action to attempt to resolve an issue related to the event report.

7. The apparatus of claim 1, wherein the event reports comprise one of an abstracted event report, a filtered event report or a raw event report.

8. The apparatus of claim 7, wherein the request to register comprises an indication of whether the event report is to be the abstracted event report, the filtered event report or the raw event report.

9. The apparatus of claim 8, wherein the request to register comprises selection criteria for the abstracted event report or the filtered event report.

10. The apparatus of claim 1, wherein the processing circuitry is further configured to:
generate an event registration for each event the processing circuitry is configured to report.

11. The apparatus of claim 10, wherein the event registration for each event comprises an identification of the event and one or more parameters associated with the event.

12. The apparatus of claim 10, wherein the event registration is reported as a capability of the apparatus.

13. The apparatus of claim 10, wherein the processing circuitry is further configured to:
generate a report for each event the processing circuitry is configured to report.

14. The apparatus of claim 13, wherein the report is transmitted to a service executed by one of a user equipment (UE), a network component or an aggregation and learning server (ALS).

15. The apparatus of claim 1, wherein the apparatus comprises a user equipment (UE) or a network component.
